(19) Europäisches Patentamt
European Patent Office
Office européen des brevets

(11) Veröffentlichungsnummer: **0 256 351**
**A2**

(12) **EUROPÄISCHE PATENTANMELDUNG**

(21) Anmeldenummer: **87110726.4**

(22) Anmeldetag: **24.07.87**

(51) Int. Cl.⁴: **C08K 13/04**, C08L 101/00, C08L 67/02, C08L 77/00, //(C08K13/04,3:22,7:04),(C08L101/00,21:00)

(30) Priorität: **07.08.86 DE 3626777**

(43) Veröffentlichungstag der Anmeldung: **24.02.88 Patentblatt 88/08**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Plachetta, Christoph, Dr.**
**Albert-Einstein-Allee 12**
**D-6703 Limburgerhof(DE)**
Erfinder: **Reimann, Horst, Dr.**
**Adelheidstrasse 26**
**D-6520 Worms 1(DE)**
Erfinder: **Steinberger, Rolf, Dr.**
**Am Moenchhof 47**
**D-6707 Schifferstadt(DE)**
Erfinder: **Theysohn, Rainer, Dr.**
**Am Bruch 38**
**D-6710 Frankenthal(DE)**

(54) **Verstärkte thermoplastische Formmassen mit heller Einfärbung.**

(57) Thermoplastische Formmassen, enthaltend
A) 10-91,9 Gew.% eines thermoplastischen Polymeren,
B) 7-60 Gew.% eines verstärkenden Füllstoffs,
C) 0,1-40 Gew.% Titandioxid und
D) 1-40 Gew.% eines Kautschuks.

EP 0 256 351 A2

Xerox Copy Centre

## Verstärkte thermoplastische Formmassen mit heller Einfärbung

Die Erfindung betrifft thermoplastische Formmassen, enthaltend

A) 10 - 91,9 Gew.% eines thermoplastischen Polymeren,

B) 7 - 60 Gew.% eines verstärkenden Füllstoffs,

C) 0,1 - 40 Gew.% Titandioxid und

D) 1 - 40 Gew.% eines Kautschuks.

Weiterhin betrifft die Erfindung die Verwendung derartiger Formmassen zur Herstellung von Formkörpern und die aus den Formmassen erhältlichen Formkörper.

Es ist seit langem bekannt, daß verstärkende Füllstoffe enthaltende Kunststoffe Vorteile gegenüber den unverstärkten Produkten bieten. Vor allem die mechanischen Eigenschaften werden durch die Verstärkung deutlich verbessert.

Für bestimmte Anwendungen ist es erforderlich, thermoplastische Formmassen mit entsprechenden Pigmenten einzufärben. Dabei sind anorganische Pigmente den organischen Farbstoffen wegen ihrer besseren thermischen Stabilität im allgemeinen vorzuziehen, da sie die zum Extrudieren oder Spritzgießen erforderlichen Temperaturen besser überstehen.

Anorganische Weißpigmente, darunter vor allem Titandioxid, besitzen einen hohen Brechungsindex, der eine gute Lichtstreuung und ein hohes Aufhellvermögen gewährleistet.

Aus der DE-AS 22 26 932 ist bekannt, daß die mit harten anorganischen Pigmenten pigmentierten glasfaserverstärkten Thermoplaste schlechtere mechanische Eigenschaften zeigen als die entsprechenden unpigmentierten Werkstoffe. Der Verstärkungseffekt der Glasfasern wird durch die Kerbwirkung des Titandioxids teilweise wieder aufgehoben. Außerdem verschlechtert sich die Schlagzähigkeit erheblich.

Zinksulfid als Weißpigment hat auf die Glasfasern keinen so ausgeprägten negativen Einfluß, doch ist Zinksulfid mit den Wärmestabilisatoren auf Kupferbasis, die häufig in Thermoplasten verwendet werden, nicht verträglich und es tritt eine Vergrauung der Formmassen bei der Verarbeitung auf. Dies ist vermutlich auf die Bildung von schwarzem Kupfersulfid zurückzuführen.

Darüber hinaus wird mit $TiO_2$ als hell einfärbendem Pigment ein höherer Weißgrad erzielt als mit ZnS.

Aufgabe der vorliegenden Erfindung war es daher, verstärkte thermoplastische Formmassen mit hohem Weißgrad ohne negative Beeinflussung der Wärmestabilisatoren zur Verfügung zu stellen.

Diese Aufgabe wird erfindungsgemäß durch die eingangs definierten thermoplastischen Formmassen gelöst.

Unter thermoplastischen Polymeren A) sind hierin prinzipiell alle unter dem Einfluß von Wärme verarbeitbaren Polymeren zu verstehen. Beispiele hierfür sind Polyamide, Polyester, Polycarbonate, Polyphenylenoxide, Homo-und Copolymerisate des Styrols, Homo-und Copolymerisate des Formaldehyds und/oder Trioxans, Homo-und Copolymerisate von Olefinen mit 2 bis 8 C-Atomen und Polyvinylchlorid sowie deren Mischungen.

Das Molekulargewicht (Gewichtsmittelwert) dieser Polymeren liegt im allgemeinen im Bereich von 2000 bis 2 000 000, insbesondere von 5000 bis 500 000, abhängig vom Typ des Polymeren.

Sowohl die Polymeren selbst als auch Verfahren zu ihrer Herstellung sind an sich bekannt und in der Literatur beschrieben.

Mit Polyamiden und/oder Polyestern als Komponente A) werden besonders vorteilhafte Resultate erzielt.

Von den Polyamiden werden halbkristalline oder amorphe Harze mit einem Molekulargewicht (Gewichtsmittelwert) von mindestens 5000, wie sie z.B. in den deutschen Offenlegungsschriften 20 71 250, 20 71 251, 21 30 523, 21 30 948, 22 41 322, 23 12 966, 25 12 606 und 33 93 210 beschrieben werden, bevorzugt.

Beispiele hierfür sind Polyamide, die sich von Lactamen mit 7 - 13 Ringgliedern ableiten, wie Polycaprolactam, Polycapryllactam und Polylaurinlactam, sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen, und aromatische Dicarbonsäuren einsetzbar. Hier seien nur Adipinsäure, Azelainsäure, Sebacinsäure, Dodecandisäure und Terephthal-und/oder Isophthalsäure genannt.

Als Diamine eignen sich besonders Alkandiamine mit 6 bis 12, insbesondere 6 bis 8 Kohlenstoffatomen, sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan. Weiterhin sind Polyamide, die durch Copolymerisation zweier oder mehrerer der vorgenannten Monomeren erhältlich sind, oder Mischungen mehrerer Polyamide geeignet.

Verfahren zur Herstellung dieser Polyamide wie auch die Polyamide selbst sind an sich bekannt und in der Literatur beschrieben, so daß sich hier nähere Angaben erübrigen.

Die relative Viskosität der Polyamide liegt im allgemeinen im Bereich von 2,2 bis 4,5, gemessen in 1 gew.%iger Lösung in 96%iger Schwefelsäure bei 25°C.

Von den Polyestern werden vorzugsweise solche verwendet, die einen aromatischen Ring in der Hauptkette enthalten. Der aromatische Ring kann auch substituiert sein, z.B. durch Halogene, wie Chlor und Brom und durch $C_1$-$C_4$-Alkylgruppen, wie z.B. Methyl-, Ethyl-, i-und n-Propyl-und i-, n-und t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente, wie z.B. Polyethylenterephthalat oder Polybutylenterephthalat werden besonders bevorzugt.

Die relative Viskosität $\eta_{spec}/c$ der Polyester gemessen an einer 0,5 %igen Lösung in einem Phenol/o-Dichlorbenzolgemisch (Gewichtsverhältnis 3:2) bei 25°C liegt im allgemeinen im Bereich von 1,2 bis 1,8.

Der Anteil der Komponente A) an den erfindungsgemäßen Formmassen beträgt 10 bis 91,9, vorzugsweise 20 bis 71,9 und insbesondere 25 bis 61,9 Gew.%, bezogen auf das Gesamtgewicht der Formmasse.

Als verstärkende Füllstoffe B) sind prinzipiell alle Füllstoffe geeignet, die eine Verbesserung der mechanischen Eigenschaften der Formmassen mit sich bringen. Bevorzugt werden faserförmige Füllstoffe, wie Glasfasern, Kohlenstoff-Fasern oder auch faserförmige Silikate, wie Wollastonit. Auch Glaskugeln können vorteilhaft eingesetzt werden.

Bei der Verwendung von Glasfasern können diese zur besseren Verträglichkeit mit dem Polyamid mit einer Schlichte und einem Haftvermittler ausgerüstet sein. Im allgemeinen haben die Glasfasern einen Durchmesser im Bereich von 6 bis 20 $\mu$m. Die Einarbeitung in die Formmassen kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Der Anteil der verstärkenden Füllstoffe B) an den erfindungsgemäßen Formmassen beträgt 7 bis 60, vorzugsweise 10 bis 55 und insbesondere 15 bis 50 Gew.%, bezogen auf das Gesamtgewicht der Formmassen.

Titandioxid C) wird in Mengen von 0,1 bis 40, vorzugsweise 0,5 bis 30 und insbesondere 1 bis 25 Gew.%, bezogen auf das Gesamtgewicht der Formmassen, eingesetzt. Es können sowohl Rutil-, Anatas-als auch Brookit-Typen eingesetzt werden. Die mittlere Teilchengröße, d.h. die Teilchengröße oberhalb und unterhalb der die Teilchengröße von jeweils 50 Gew.% der Teilchen liegt ($d_{50}$), liegt vorzugsweise im Bereich von 0,0001 bis 0,01 mm, insbesondere im Bereich von 0,0001 bis 0,001 mm.

Das Titandioxid kann im allgemeinen auch als Batch im als Komponente D verwendeten Kautschuk in die Massen eingearbeitet werden. Die Konzentration des $TiO_2$ in diesem Batch kann bis zu 80, vorzugsweise bis zu 60 Gew.%, bezogen auf den Kautschuk, betragen.

Zur besseren Einarbeitung in die Formmassen kann das eingesetzte Titandioxid oberflächlich mit an sich bekannten anorganischen oder organischen Verbindungen (Haftvermittlern) beschichtet sein.

Als Komponente D) enthalten die erfindungsgemäßen Formmassen 1 bis 40, insbesondere 3 bis 35 und besonders bevorzugt 5 bis 30 Gew.% eines schlagzäh modifizierenden Kautschuks.

Im allgemeinen handelt es sich bei den Kautschuken um Copolymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril und Acryl-und Methacrylsäureester mit 1 bis 18 C-Atomen in der Alkoholkomponente.

Kautschuke, die reaktive Komponenten enthalten, die eine Haftung mit der Komponente A) ermöglichen, werden dabei bevorzugt. Als reaktive Komponenten seien olefinisch ungesättigte Carbonsäuren oder deren Anhydride genannt.

Kautschuke D) werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Viskositäten (MLI+4/100°C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM-bzw. EPDM-Kautschuke können vorzugsweise auch mit reaktiven Carbonsäuren oder deren Derivaten gepfropft sein. Hier seien nur Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure-bzw. Epoxygruppen enthaltenden Monomeren der allgemeinen Formeln I oder II oder III oder IV zum Monomerengemisch in den Kautschuk eingebaut

$$R_1C(COOR_2)=C(COOR_3)R_4 \quad (I)$$

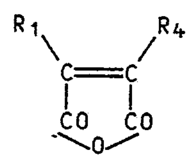

(II)

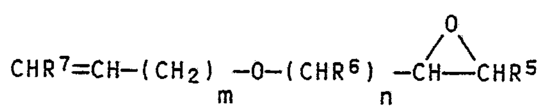

(III)

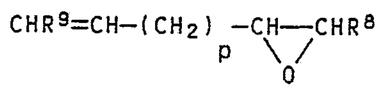

(IV)

wobei $R^1$ -$R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind $R^1$ -$R^7$ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid, Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure-und/oder Methacrylsäureesters jeweils im Bereich von 1 bis 49 Gew.%.

Besonders bevorzugt sind Copolymerisate aus

50 bis 98, insbesondere 60 bis 95 Gew.% Ethylen,

0,5 bis 40, insbesondere 3 bis 20 Gew.% Glycidylacrylat und/oder Glycidylmethacrylat, Acrylsäure und/oder Maleinsäureanhydrid,

1 bis 45, insbesondere 10 bis 35 Gew.% n-Butylacrylat und/oder 2-Ethylhexylacrylat.

Weitere bevorzugte Ester der Acryl-und/oder Methacrylsäure sind die Methyl-, Ethyl-, Propyl-und i-bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) D) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk D) können auch Pfropfpolymerisate aus

25 bis 98 Gew.% eines Acrylatkautschuks mit einer Glasübergangstemperatur von unter -20°C als Pfropfgrundlage (Basispolymer)

und

2 bis 75 Gew.% eines copolymerisierbaren ethylenisch ungesättigten Monomeren, dessen Homo-bzw. Copolymerisate eine Glasübergangstemperatur von mehr als 25°C aufweisen, als Pfropfauflage (Pfropfhülle)

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen vorzugsweise eine Glasübergangstemperatur von unter -30°C, insbesondere von unter -40°C auf.

Es versteht sich, daß auch Mischungen der vorstehend aufgeführten Kautschuktypen eingesetzt werden können.

Neben den wesentlichen Komponenten A) bis D) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis E).

Übliche Zusatzstoffe sind beispielsweise Stabilisatoren und Oxidationsverzögerer, Mittel gegen Wärmezersetzung und Zersetzung durch ultraviolettes Licht, Gleit-und Entformungsmittel, Färbemittel, wie Farbstoffe und Pigmente (außer Titandioxid), nicht verstärkende Füllstoffe und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit-und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 220 bis 350°C, vorzugsweise von 230 bis 330°C.

Die Zugabe des Titandioxids kann direkt zur Schmelze erfolgen oder auch in Form von Pulver oder in Abmischung mit Kautschuk mit dem Polyamidgranulat abgemischt werden.

Die erfindungsgemäßen Formmassen zeichnen sich durch eine helle Farbe bei praktisch unveränderter Schlagzähigkeit gegenüber unpigmentierten kautschukmodifizierten Formmassen aus.

Beispiel 1

Polycaprolactam mit einem K-Wert von 73 (nach Fikentscher, Cellulose-Chemie 13, 1932, S. 58) wurden in einem Fluidmischer mit 1 Gew.% Titandioxid (mittlerer Teilchendurchmesser $d_{50}$ = 0,2 µm) und 10 Gew.% eines Ethylen-n-Butylacrylat-Maleinsäureanhydrid-Terpolymeren (Zusammensetzung 66:33:1 Gew.%) vermischt und anschließend in einem Extruder bei 270 bis 290°C aufgeschmolzen. Über eine Öffnung weiter stromabwärts wurden 30 Gew.% Glasfasern als Endlosstrang (Roving) eindosiert.

Die homogene Mischung wurde ausgepreßt, in Strängen abgezogen, abgekühlt und anschließend granuliert.

Aus den Granulaten wurden Prüfkörper gespritzt, und deren Schlagzähigkeit nach DIN 53 453 und die Zugfestigkeit nach DIN 53 455 bestimmt.

Die Farbbeurteilung wurde ebenfalls an den Prüfkörpern vorgenommen.

Beispiel 2

Es wurde wie in Beispiel 1 gearbeitet, jedoch anstelle eines Polyamids Polybutylenterephthalat (K-Wert: 66) eingesetzt. Als Kautschuk wurde ein Ethylen-n-Butylacrylat-Glycidylmethacrylat-Terpolymeres (Zusammensetzung 62:35:3 Gew.%) eingesetzt.

Vergleichsbeispiel 1

Polycaprolactam (wie in Beispiel 1) wurde in einem Extruder aufgeschmolzen und in die Schmelze wurden, wie in Beispiel 1 beschrieben, 35 Gew.% Glasfasern eingebracht. Die weitere Verarbeitung erfolgte wie in Beispiel 1.

Vergleichsbeispiel 2

Es wurde wie in Beispiel 1 gearbeitet, jedoch kein Kautschuk zugesetzt.

Vergleichsbeispiel 3

Es wurde wie in Beispiel 1 gearbeitet, jedoch kein Titandioxid zugesetzt.

Vergleichsbeispiel 4

Es wurde wie in Beispiel 1 gearbeitet, jedoch anstelle von Titandioxid Zinksulfid zugesetzt. Die Ergebnisse der Untersuchungen sind der nachfolgenden Tabelle zu entnehmen.

Tabelle 1

| Zusammensetzung/Gew.% | Vergleichs-beispiel 1 | Vergleichs-beispiel 2 | Vergleichs-beispiel 3 | Vergleichs-beispiel 4 | Beispiel 1 | Beispiel 2 |
|---|---|---|---|---|---|---|
| Polycaprolactam[1] | 70 | 69 | 65 | 64 | 64 | 64[4] |
| Glasfaser | 30 | 30 | 30 | 30 | 30 | 30 |
| $TiO_2$ | - | 1 | - | 1[3] | 1 | 1 |
| Kautschuk[2] | - | - | 5 | 5 | 5 | 5[5] |
| Schlagzähigkeit $a_n$/kJ $m^{-2}$ (DIN 53 453) | 60 | 19 | 65 | 69 | 65 | 45 |
| Farbe | natur | weiß | opak | grau | weiß | weiß |

1 enthält 100 ppm Cu als CuJ und 1500 ppm KJ als Wärmestabilisator

2 Ethylen-n-Butylacrylat-Maleinsäureanhydrid-Terpolymer (Zusammensetzung: 66:33:1 Gew.%)

3 ZnS anstelle von $TiO_2$

4 Polybutylenterephthalat

5 Ethylen-n-Butylacrylat-Glycidylmethacrylat-Terpolymer (62:35:3 Gew.%)

## Ansprüche

1. Thermoplastische Formmassen, enthaltend
A) 10-91,9 Gew.% eines thermoplastischen Polymeren,
B) 7-60 Gew.% eines verstärkenden Füllstoffs,
C) 0,1-40 Gew.% Titandioxid und
D) 1-40 Gew.% eines Kautschuks.

2. Thermoplastische Formmassen nach Anspruch 1, dadurch gekennzeichnet, daß die Komponente A) ein Polyamid und/oder ein Polyester ist.

3. Thermoplastische Formmassen nach Anspruch 1, dadurch gekennzeichnet, daß der verstärkende Füllstoff B) faserförmig ist.

4. Thermoplastische Formmassen nach Anspruch 2, dadurch gekennzeichnet, daß als verstärkender Füllstoff B) Wollastonit und/oder Glasfasern verwendet werden.

5. Verwendung der Formmassen gemäß den Ansprüchen 1 bis 3 zur Herstellung von Formkörpern.

6. Formkörper, erhältlich aus Formmassen gemäß den Ansprüchen 1 bis 4.